(19) **Europäisches Patentamt**
**European Patent Office**
**Office européen des brevets**

(11) **EP 3 358 029 B1**

(12) **EUROPEAN PATENT SPECIFICATION**

(45) Date of publication and mention of the grant of the patent:
**24.06.2020  Bulletin 2020/26**

(21) Application number: **16850795.2**

(22) Date of filing: **05.07.2016**

(51) Int Cl.:
*C22C 38/00* (2006.01)     *B21B 3/02* (2006.01)
*C21C 7/00* (2006.01)     *C21C 7/04* (2006.01)
*C21C 7/068* (2006.01)     *C21C 7/076* (2006.01)
*C21D 9/46* (2006.01)     *C22C 38/58* (2006.01)
*C22C 38/02* (2006.01)     *C22C 38/04* (2006.01)
*C22C 38/42* (2006.01)     *C22C 38/44* (2006.01)
*C21C 7/06* (2006.01)     *C22C 38/40* (2006.01)

(86) International application number:
**PCT/JP2016/069952**

(87) International publication number:
**WO 2017/056618 (06.04.2017 Gazette 2017/14)**

(54) **HIGH-STRENGTH STAINLESS STEEL SHEET HAVING EXCELLENT FATIGUE CHARACTERISTICS, AND METHOD FOR MANUFACTURING SAME**

HOCHFESTES EDELSTAHLBLECH MIT HERVORRAGENDEN ERMÜDUNGSEIGENSCHAFTEN UND VERFAHREN ZUR HERSTELLUNG DAVON

TÔLE D'ACIER INOXYDABLE À HAUTE RÉSISTANCE PRÉSENTANT D'EXCELLENTES CARACTÉRISTIQUES DE FATIGUE ET SON PROCÉDÉ DE FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.09.2015  JP 2015191221**

(43) Date of publication of application:
**08.08.2018  Bulletin 2018/32**

(73) Proprietor: **NIPPON STEEL STAINLESS STEEL CORPORATION**
**Tokyo 100-0005 (JP)**

(72) Inventors:
 • **EHARA Yasuhiro**
  **Tokyo 100-8366 (JP)**
 • **SAITO Shun**
  **Tokyo 100-8366 (JP)**

 • **MATSUBAYASHI Hiroyasu**
  **Tokyo 100-8366 (JP)**

(74) Representative: **Schmidbauer, Andreas Konrad**
**Wagner & Geyer Partnerschaft mbB**
**Patent- und Rechtsanwälte**
**Gewürzmühlstrasse 5**
**80538 München (DE)**

(56) References cited:
  JP-A- H0 641 686     JP-A- H04 202 643
  JP-A- H08 176 641     JP-A- 2002 167 647
  JP-A- 2002 167 647     JP-A- 2002 275 591
  JP-A- 2005 290 449     JP-A- 2005 290 449
  JP-A- 2005 290 450     JP-A- 2015 074 807
  KR-B1- 100 729 123

**Description**

Technical Field

The present invention relates to, in a stainless steel species capable of providing an extremely high strength by utilizing formation of a deformation induced martensite phase, solid-solution strengthening by a large Si content, and age hardening, a steel sheet that is significantly suppressed in formation of a coarse hard non-metallic inclusion. The invention also relates to a production method therefor.

Background Art

As a high strength stainless steel, a metastable austenite stainless steel represented by SUS301 has been widely used. However, for providing a high strength with SUS301, the cold rolling reduction ratio is necessarily increased, and accordingly the reduction in toughness is associated therewith. As a technique for avoiding the problem to achieve both a high strength and a high toughness at high levels simultaneously, a measure of achieving a high strength by utilizing formation of a deformation induced martensite phase, solid-solution strengthening by a large Si content, and age hardening has been known, and has been used in such purposes as an ID saw blade substrate and the like (Japanese Patent No. 3,219,117).

The stainless steel of the type described in Japanese Patent No. 3,219,117 has a high strength and a high toughness through formation of a dual phase structure of a deformation induced martensite and austenite through cold rolling, and has good fatigue resistance characteristics as a rotary member having a sheet thickness of 0.1 mm or more, such as an ID saw blade. However, a further enhancement of the fatigue resistance characteristics is demanded in the case where the stainless steel is worked into a thin sheet material having a sheet thickness of less than 0.1 mm, particularly from 20 to 70 $\mu$m, and is applied to the purpose of a spring material, which repeatedly receives elastic deformation. Examples of the factors deteriorating the fatigue resistance characteristics of a steel material include the presence of a non-metallic inclusion. Even assuming inclusions having the same size, when the sheet thickness is decreased, the length proportion in the sheet thickness direction of the inclusion occupied in the sheet thickness is increased, and stress is concentrated to the circumference of the inclusion particles, which function as a starting point or a propagation path of cracks. It is more difficult in a thinner sheet material to avoid the decrease of the fatigue characteristics caused by the non-metallic inclusion.

As a method for decreasing the amount of the non-metallic inclusion in a steel material (i.e., increasing the cleanliness degree thereof), measures for optimizing the slag composition in refining have been variously investigated. However, from the standpoint of preventing working cracks and fatigue breaking, it is not necessarily sufficient that only the cleanliness degree is simply enhanced, and the control of the composition of the non-metallic inclusion is said to be effective. For example, Japanese Patent No. 3,865,853 describes a measure, in which in manufacture of general purpose austenite steel species, such as SUS304, the composition of the non-metallic inclusion is controlled by adjusting the slag basicity to from 1.4 to 2.4 with a refining furnace having a lining of a dolomite refractory, and thereby an austenite stainless steel having no working crack is provided. However, according to the researches by the present inventors, it has been found that even though the measure described in Japanese Patent No. 3,865,853 is tried for a steel species having a large Si content, it is difficult to improve significantly the fatigue characteristics of the thin sheet material.

Japanese Patent No. 5,212,581 describes a technique, in which in a large Si content austenite stainless steel, the total amount of the $B_1$ type inclusions having high melting points mainly formed of alumina is decreased, and thereby the corrosion resistance in high-temperature and high-concentration nitric acid is improved. It is described that for suppressing formation of the $B_1$ type inclusions, the reduction recovery of Cr with Al is not performed, and an Fe-Si alloy having a small Al content of approximately 0.1% is added (paragraphs 0052 and 0053). However, the target steel in Japanese Patent No. 5,212,581 is an austenite single phase steel having a Ni content of 10% or more (paragraph 0033), which is not a steel species that intends the enhancement of the strength through the formation of a deformation induced martensite phase. The literature does not teach a measure for improving the fatigue resistance characteristics in a thin sheet material for a purpose of a spring. As described later, it is important that the formation of the TiN based inclusion is suppressed for improving the fatigue resistance characteristics of the steel species targeted in the invention, but the manufacturing method described in the literature cannot stably decrease the TiN based inclusion.

Attention is also drawn to JP 2005 290 449 A, which shows a fine inclusions contained stainless steel and a manufacturing method thereof. In the stainless steel, the inclusion is composed of CaO - $SiO_2$ - MgO - $Al_2O_3$ - MnO - $Cr_2O_3$. The stainless steel is characterized in that the average composition of non-metallic inclusions is $Cr_2O_3$ : 1% or more and 55% or less, $Al_2O_3$ : 50% or less and MgO : 15% or less, and the maximum circle equivalent diameter of the inclusion is 20$\mu$ m or less. The chemical composition, in term of mass%, of the stainless steel is C : 0.01% or more and 0.15% or less, and Si : 0.1% or more and 3.0% or less and 0.1% or more and 4.0% or less, P : 0.050% or less, S : 0.020% or less, Cr : 10.0% or more and 25.0% or less, Ni : 3.0% or more and 22.0% or less, N : 0.01% or more and 0.30% or less, and optionally at least one of Ti : 0.01% or more and 0.5% or less, Nb : 0.01% or more and 0.5% or less and V : 0.01% or more and 0.5% or less , and the balance of Fe.

Further, JP 2002 167 647 A relates to a Si-deoxidized steel excellent in fatigue strength and a manufacturing method thereof. The Si-deoxidized steel contains inclusions having composition of $SiO_2$ : 45% or more in mass% and an alkali metal oxide ($R_2O$) : 0.5 to 10%, wherein alkali metal R is Na, K, or Li.

Summary of Invention

Technical Problem

Among non-metallic inclusions contained in the steel, an inclusion of a kind having a high melting point and a large hardness remains as a granular matter after hot rolling, and after cold rolling, the hard grains having been crushed to a certain extent remain and line up in the rolling direction. Therefore, it is considered that the fatigue resistance characteristics of the thin sheet material can be enhanced by significantly suppressing the formation of the hard non-metallic inclusion of this type. However, for providing a considerably high strength level for the steel species of the deformation induced martensite forming type, it is necessary to contain Si in a large amount exceeding 2% by mass. When the Si content in the steel is increased in this manner, it is considerably difficult to suppress the formation of the hard non-metallic inclusion. As described in Japanese Patent No. 5,212,581, even such a measure is applied that Al is not added, and an Fe-Si alloy having a small Al content is added, the fatigue resistance characteristics of the thin sheet material cannot be stably improved.

The invention is to achieve, in mass production sites, a thin sheet material having a sheet thickness of from 20 to 500 μm having a distribution mode of a non-metallic inclusion that is effective for improving the fatigue resistance characteristics, in a stainless steel of the deformation induced martensite forming type having a large Si content.

Solution to Problem

As a result of detailed investigations by the inventors, it has been found that in a large Si content stainless steel species of the deformation induced martensite forming type, for improving the fatigue resistance characteristics in the use as a thin sheet spring material, it is considerably effective to decrease the amount of a TiN based inclusion and a spinel based inclusion containing one or more of Al and Mg each having a circle equivalent diameter of 6.0 μm or more present in the hot rolled steel sheet. It has also been found that the decrease of the coarse inclusions can be achieved in mass production operation by strictly managing the incorporation of Ti and Al from the attachment of the container housing the molten steel, the auxiliary raw material, and the slag forming flux, and controlling the basicity of the final slag formed after the addition of Si to a range that is lower than the ordinary range. When the hot rolled steel sheet is formed into a thin sheet through a cold rolling process, the inclusions in the thin sheet are in such an existence form that is considerably advantageous for the improvement of the fatigue resistance characteristics. The invention has been made based on the knowledge.

In accordance with the present invention, a stainless steel sheet and a production method of a stainless steel sheet as set forth in claims 1 and 5, respectively are provided. Further embodiments are inter alia disclosed in the dependent claims. For achieving the object, the invention inter alia provides a stainless steel sheet: having a sheet thickness of from 20 to 500 μm; having a chemical composition containing, in terms of percentage by mass, from 0.010 to 0.200% of C, more than 2.00% and 4.00% or less of Si, from 0.01 to 3.00% of Mn, 3.00% or more and less than 10.00% of Ni, from 11.00 to 20.00% of Cr, from 0.010 to 0.200% of N, from 0 to 3.00% of Mo, from 0 to 1.00% of Cu, from 0.001 to 0.008% of Ti, from 0.001 to 0.008% of Al, 0.040% or less of P, 0.002% or less of S, 0 to 0.002% of Mg, and the balance of Fe, with unavoidable impurities; and having, with an assumption that in a cross section (L cross section) in parallel to a rolling direction and a sheet thickness direction, a group of non-metallic inclusion particles that line up with an interparticle distance in the rolling direction of 20 μm or less (i.e., from 0 to 20 μm) and an interparticle distance in the sheet thickness direction of 10 μm or less (i.e., from 0 to 10 μm) is one non-metallic inclusion, a number density of the non-metallic inclusion having a length in the rolling direction of 40 μm or more of 3.0 or less per square millimeter on the L cross section.

Herein, the interparticle distance (μm) in the rolling direction of two particles appearing on the L cross section is the distance (μm) in the rolling direction between the areas in the rolling direction where the particles are present respectively in the case where the areas in the rolling direction do not overlap each other, or is 0 μm in the case where the areas overlap each other. Similarly, the interparticle distance (μm) in the sheet thickness direction of two particles appearing on the L cross section is the distance (μm) in the sheet thickness direction between the areas in the sheet thickness direction where the particles are present respectively in the case where the areas in the sheet thickness direction do not overlap each other, or is 0 μm in the case where the areas overlap each other. The two particles that have an interparticle distance in the rolling direction of 20 μm or less and an interparticle distance in the sheet thickness

direction of 10 μm or less belong to the same "group".

In the non-metallic inclusion having a length in the rolling direction of 40 μm or more, examples thereof that exert a particularly large influence on the fatigue resistance characteristics include a material containing one or two of (i) and (ii): (i) a TiN based inclusion particle and (ii) a spinel based inclusion particle containing one or more of Al and Mg.

The Ti content is the total Ti content in the steel including Ti that is present as an inclusion. Similarly, the Al content is the total Al content in the steel including Al that is present as an inclusion.

The number density of the inclusion can be measured by observing an observation plane obtained by mirror-polishing the L cross section with an SEM (scanning electron microscope). The discrimination in terms of kind of the inclusion among the TiN based inclusion and the spinel based inclusion containing one or more of Al and Mg can be made, for example, by elemental analysis with an EDX (energy dispersive X-ray spectrometry) attached to the SEM.

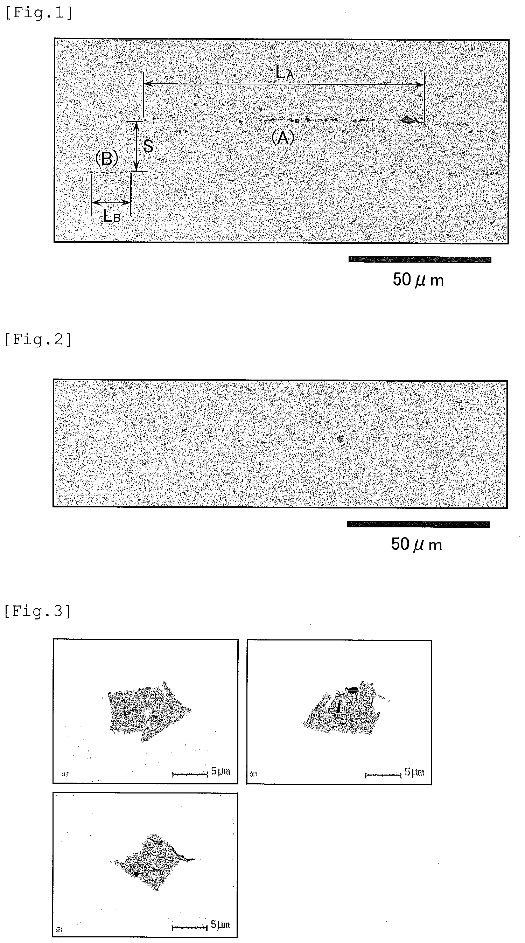

Fig. 1 shows an example of the SEM micrograph of the inclusion appearing on the L cross section of the conventional cold rolled steel sheet having a sheet thickness of 120 μm (Conventional Example No. 1 described later). The horizontal direction in the figure agrees with the rolling direction, and the vertical direction in the figure agrees with the sheet thickness direction. Groups of non-metallic inclusion particles lining up substantially along the rolling direction appear at two positions (A) and (B). The interparticle distance in the sheet thickness direction between the proximate particles of the groups (A) and (B) is shown in the symbol S in Fig. 1. The interparticle distance in the sheet thickness direction S exceeds 10 μm, and therefore taking all the particles of the groups (A) and (B) as the target, the particles do not correspond to the "group of non-metallic inclusion particles that line up with an interparticle distance in the rolling direction of 20 μm or less and an interparticle distance in the sheet thickness direction of 10 μm or less". Taking only the particles of the group (A) as the target, all the constitutional particles each have an interparticle distance in the rolling direction of 20 μm or less and an interparticle distance in the sheet thickness direction of 10 μm or less with respect to at least one of the other particles, and therefore the particles constituting the group (A) correspond to the "group of non-metallic inclusion particles that line up with an interparticle distance in the rolling direction of 20 μm or less and an interparticle distance in the sheet thickness direction of 10 μm or less". Accordingly, the particles constituting the group (A) are assumed to be one non-metallic inclusion. Similarly, the particles constituting the group (B) are also assumed to be one non-metallic inclusion. Consequently, two non-metallic inclusions are present in Fig. 1, and the lengths in the rolling direction thereof are shown by $L_A$ and $L_B$ respectively in Fig. 1. Therein, $L_A$ is 40 μm or more, and therefore in the two non-metallic inclusions, the non-metallic inclusion having a length in the rolling direction $L_A$ corresponds to the "non-metallic inclusion having a length in the rolling direction of 40 μm or more".

As a result of an EDX analysis, these non-metallic inclusions each are a TiN based inclusion.

Fig. 2 shows an example of the SEM micrograph of the inclusion appearing on the L cross section of the cold rolled steel sheet having a sheet thickness of 120 μm according to the invention (Invention Example No. 5 described later) in a different view field from Fig. 1. The horizontal direction in the figure agrees with the rolling direction, and the vertical direction in the figure agrees with the sheet thickness direction. The non-metallic inclusion particles present in the form of lining up in Fig. 2 correspond to the "group of non-metallic inclusion particles that line up with an interparticle distance in the rolling direction of 20 μm or less and an interparticle distance in the sheet thickness direction of 10 μm or less", and therefore the non-metallic inclusion particles are assumed to be one non-metallic inclusion. The non-metallic inclusion has a length in the rolling direction that slightly exceeds 40 μm, and therefore corresponds to the "non-metallic inclusion having a length in the rolling direction of 40 μm or more".

As a result of an EDX analysis, these non-metallic inclusions each are a TiN based inclusion.

The number density of the non-metallic inclusion having a length in the rolling direction of 40 μm or more on the L cross section of the steel sheet can be obtained in the following manner.

Measurement Method for Number Density of Non-metallic Inclusion having Length in Rolling Direction of 40 μm or more

The observation plane obtained by mirror-polishing the cross section (L cross section) in parallel to the rolling direction and the sheet thickness direction of the steel sheet is observed with an SEM. A measurement field having a length in the rolling direction of 100 μm or more and a length in the sheet thickness direction of the overall length in the sheet thickness direction is arbitrarily determined, and in all the "non-metallic inclusions having a length in the rolling direction of 40 μm or more" that are present entirely or partially in the measurement field, the number of the inclusion that is present entirely in the measurement field and the inclusion that partially protrudes outside the measurement field but is present in the measurement field with a half or more part thereof in the rolling direction present in the measurement field is counted. This operation is performed for one measurement field or two or more measurement fields that do not overlap each other until the total area of the measurement fields reaches 10 mm² or more, and the value obtained by dividing the sum of the counted numbers for the measurement fields by the total area of the measurement fields is designated as the "number density (per square millimeter) of the non-metallic inclusion having a length in the rolling direction of 40 μm or more".

In the stage of the hot rolled steel sheet, the total number density of the TiN based inclusion and the spinel based inclusion containing one or more of Al and Mg each having a circle equivalent diameter of 6.0 $\mu$m or more on the L cross section is preferably 0.05 or less per square millimeter.

The circle equivalent diameter is the particle diameter converted to the diameter of the circle that has the same area as the projected area of the inclusion particle appearing on the observation surface. The circle equivalent diameters of each of the inclusion particles can be calculated, for example, by computer image processing of an SEM micrograph of the inclusion. The number density of the inclusion in the hot rolled steel sheet can be obtained in the following manner.

Measurement Method for Number Density of Inclusion in Hot Rolled Steel Sheet

The observation plane obtained by mirror-polishing the cross section (L cross section) in parallel to the rolling direction and the sheet thickness direction of the steel sheet is observed with an SEM. A rectangular measurement field is determined in a randomly selected view field, and in all the inclusion particles observed in the view field that are a TiN based inclusion or a spinel based inclusion containing one or more of Al and Mg and have a circle equivalent diameter of 6.0 $\mu$m or more, the number of the particle that is present entirely in the measurement field and the particle that partially protrudes outside the measurement field but is present in the measurement field with a half or more part of the particle area present in the measurement field is counted. This operation is performed for plural view fields that do not overlap each other until the total area of the measurement fields reaches 200 mm$^2$ or more, and the value obtained by dividing the sum of the counted numbers for the view fields by the total area of the measurement fields is designated as the "total number density (per square millimeter) of the TiN based inclusion and the spinel based inclusion containing one or more of Al and Mg each having a circle equivalent diameter of 6.0 $\mu$m or more".

With the hot rolled steel sheet exhibiting the aforementioned inclusion distribution, a thin sheet material obtained therefrom through subsequent cold rolling provides the aforementioned prescribed inclusion distribution, providing a significant improvement effect of the fatigue resistance characteristics. As the thin sheet material, examples thereof that are particularly preferred include a thin sheet material having a tensile strength in the rolling direction of 2,000 N/mm$^2$ or more. The steel sheet obtained by cold rolling the hot rolled steel sheet having the aforementioned composition has a mixed structure of a deformation induced martensite phase and an austenite phase for the matrix (metal basis material).

As a production method of the aforementioned steel sheet, there is provided a production method of a stainless steels sheet containing:

a step of providing a molten steel having the aforementioned chemical composition, in such a manner that in component control by adding an auxiliary raw material and a slag forming flux to a molten steel having a C content of 0.20% or less having a Cr oxide-containing slag on a molten steel surface after subjecting to a decarburization process by blowing oxygen into a Cr-containing molten iron, a container housing the molten steel, the auxiliary raw material, and the slag forming flux used are selected to make a Ti content in the molten steel of 0.008% by mass or less and an Al content therein of 0.008% by mass or less, at least an Fe-Si alloy as the auxiliary raw material is dissolved in the molten steel to perform deoxidation, reduction and recovery of Cr in the slag into the molten steel, and control of a Si content in the steel, and a Ca-containing slag forming flux is added to control a slag basicity (i.e., a mass ratio of CaO/SiO$_2$) to from 1.3 to 1.5;
a step of providing a cast piece by casting the molten steel obtained in the preceding step;
a step of providing a hot rolled steel sheet by subjecting the cast piece to hot working including at least hot rolling; and
a step of providing a cold rolled steel sheet having a sheet thickness of from 20 to 500 $\mu$m by subjecting the hot rolled steel sheet to annealing and cold rolling one or more times.

Herein, the operation "selecting the container housing the molten steel, the auxiliary raw material, and the slag forming flux used to make a Ti content in the molten steel of 0.008% by mass or less and an Al content therein of 0.008% by mass or less" means that the container housing the molten steel having a small amount of the attachment or no attachment is used, and the auxiliary raw material and the slag forming flux having an impurity content managed to a low level are used, so as to prevent the Ti content in the molten steel from exceeding 0.008% by mass and to prevent the Al content therein from exceeding 0.008% by mass, due to Ti and Al incorporated from the attachment of the container housing the molten steel, the auxiliary raw material, and the slag forming flux into the molten steel. The molten steel in the stage after completing the decarburization process by blowing oxygen into the Cr-containing molten iron can be assumed to have the Ti and Al contents of substantially zero. Therefore, a steel having a Ti content of from 0 to 0.008% and an Al content of from 0 to 0.008% can be obtained by preventing or decreasing as much as possible the incorporation thereof from the outside.

The container housing the molten steel, the auxiliary raw material, and the slag forming flux used are more preferably selected to make a Ti content in the molten steel of 0.006% by mass or less and an Al content therein of 0.006% by mass or less.

Specific examples of the container housing the molten steel include a refining vessel and a ladle that are lined with a refractory. The ladle may be used directly as the refining vessel. The container housing the molten steel used is preferably a container having a refractory constituting the inner surface of the container that is not used for housing a molten steel (i.e., a new ladle).

The Fe-Si alloy used preferably has an Al content of 0.05% by mass or less, and a Ti content of 0.05% by mass or less.

While the content of Mg, which is an element forming the spinel based inclusion, in the steel is not particularly defined, it has been confirmed that the Mg content can be decreased to a level causing no problem through the aforementioned selection of the container housing the molten steel, the auxiliary raw material, and the slag forming flux effective for decreasing the Ti and Al contents. In this case, the total Mg content in the steel may be 0.002% by mass or less.

The cold rolled steel sheet may be subjected to an aging treatment, and thereby providing a steel sheet having a mixed structure of a deformation induced martensite phase and an austenite phase for the matrix (metal basis material) and a tensile strength in the rolling direction, for example, of 2,000 N/mm$^2$ or more.

Advantageous Effects of Invention

According to the invention, a thin sheet material having a significantly decreased number of a hard non-metallic inclusion having a large length in the rolling direction in a large Si content stainless steel species of the deformation induced martensite forming type can be achieved in a mass production operation. The large Si content stainless steel species of this type can exhibit a maximum level of strength among the stainless steel species, and has been used mainly such purposes as an ID saw blade. The thin sheet material can be improved in fatigue resistance characteristics by the inclusion control according to the invention, and thus the thin sheet material can be applied to the purpose of a thin sheet spring material. Accordingly, the invention can contribute to the further size reduction of the thin sheet spring component used in electronic devices and the like through the utilization of the high strength characteristics inherent to the steel species.

Brief Description of Drawings

Fig. 1 is the SEM micrograph of the non-metallic inclusion appearing on the L cross section of the cold rolled steel sheet of Conventional Example No. 1.
Fig. 2 is the SEM micrograph of the non-metallic inclusion appearing on the L cross section of the cold rolled steel sheet of Invention Example No. 5.
Fig. 3 is the SEM micrograph of the typical TiN based inclusion observed on the L cross section of the hot rolled steel sheet of Conventional Example No. 4.
Fig. 4 is the SEM micrograph of the typical TiN based inclusion observed on the L cross section of the hot rolled steel sheet of Invention Example No. 5.

Description of Embodiments

Chemical Composition

The percentage for the chemical composition is percentage by mass unless otherwise indicated.

The invention targets a steel having the following chemical composition (A).

(A) In terms of percentage by mass, from 0.010 to 0.200% of C, more than 2.00% and 4.00% or less of Si, from 0.01 to 3.00% of Mn, 3.00% or more and less than 10.00% of Ni, from 11.00 to 20.00% of Cr, from 0.010 to 0.200% of N, from 0 to 3.00% of Mo, from 0 to 1.00% of Cu, from 0 to 0.008% of Ti, from 0 to 0.008% of Al, and the balance of Fe, with unavoidable impurities.

The steel species having the composition forms deformation induced martensite and is increased in strength in cold rolling. Furthermore, in the subsequent aging treatment, the solute atoms, such as C and N, form a Cottrell atmosphere mainly in the martensite phase to fix the dislocation, which causes a function enhancing the strength (strain aging). Moreover, Si present in a large amount in the steel provides solid-solution strengthening of the martensite phase and the residual austenite phase, which contributes to the enhancement of the strength.

In the invention, for sufficiently providing the benefit of the aforementioned strength enhancing function of Si, a steel having a Si content exceeding 2.00% is targeted. However, with an excessively large Si content, such problems that hot working cracks tend to occur, and the like may be conspicuous. Herein, the Si content is restricted to 4.00% or less.

C is an element forming an austenite phase and is necessary for strengthening the steel. However, an excessive amount of C may cause deterioration of the corrosion resistance and the toughness. In the invention, a steel having a C content of from 0.010 to 0.200% is targeted, and particularly in the case where a high strength is targeted, the C content is advantageously in a range of from 0.050 to 0.100%.

N is an element forming an austenite phase and is necessary for strengthening the steel. However, an excessive amount of N may be a factor promoting the formation of a TiN based inclusion. In the invention, a steel having a N content of from 0.010 to 0.200% is targeted. With the range, the particle diameter distribution of the TiN based inclusion can be optimized to the range defined in the invention by the production method of suppressing the incorporation of Ti described later. The preferred range of the N content is from 0.050 to 0.085%.

Mn is an element, with which the austenite stability can be easily controlled by controlling the content thereof, and the content thereof is controlled in a range of from 0.01 to 3.00%. A large amount of Mn contained may prevent the deformation induced martensite phase from being induced. The Mn content is more preferably controlled in a range of 1.00% or less, and may be managed to a range of 0.50% or less.

Ni is an element forming an austenite phase, and the content thereof of 3.00% or more is ensured for providing a metastable austenite phase at ordinary temperature. A too large Ni content may prevent the deformation induced martensite phase from being induced, and therefore the Ni content is less than 10.00%. The Ni content is more preferably from 7.00 to 9.50%.

Cr is an element necessary for ensuring the corrosion resistance. In the invention, a steel having a Cr content of from 11.00 to 20.00% is targeted. Cr is an element forming a ferrite phase, and with a larger amount thereof exceeding the above range, an austenite single phase structure may not be obtained at a high temperature in some cases. The more preferred range of the Cr content is from 12.00 to 15.00%.

Mo may be contained depending on necessity since Mo has a function enhancing the corrosion resistance, and also has a function contributing the strengthening through the formation of a Mo precipitate in the aging treatment and preventing the structure work-hardened in the cold rolling from being softened in the aging treatment. For sufficiently providing the benefit of the functions, it is preferred to ensure a Mo content of 1.0% or more. In the case where a strength level with a tensile strength in the rolling direction of 2,000 N/mm$^2$ or more is intended, it is extremely effective that Mo is contained in an amount of 2.00% or more. However, a too large amount of Mo contained may cause formation of a $\delta$ ferrite phase at a high temperature, and therefore in the case where Mo is contained, the content thereof is in a range of 3.00% or less, and may be managed to a range of 2.50% or less.

Cu may be contained depending on necessity since Cu has a function increasing the strength through the mutual action with Si in the aging treatment. In this case, the Cu content is more preferably 0.01% or more. A too large content of Cu may be a factor decreasing the hot workability. In the case where Cu is contained, the content thereof is in a range of 1.00% or less.

Ti is an element forming a TiN based inclusion, and the Ti content is necessarily suppressed to a low level particularly in a large Si content steel, in which TiN is easily formed. As a result of the various investigations, the Ti content is necessarily 0.008% or less, and is preferably 0.006% by mass or less. The Ti content is preferably as small as possible, but in view of the cost in a mass production operation, it is rational that the Ti content is in a range of 0.001% or more.

Al is a factor generating a spinel based inclusion through the formation of Al$_2$O$_3$, and the Al content is necessarily suppressed to a low level particularly in a molten steel of a large Si content steel, in which Al$_2$O$_3$ is easily formed. In the invention, the Al content is preferably as small as possible. As a result of the various investigations, the Al content is necessarily 0.008% or less, and is preferably 0.006% by mass or less. The Al content is preferably as small as possible, but in view of the cost in a mass production operation, it is rational that the Al content is in a range of 0.001% or more. However, even with an Al content in the aforementioned range, it may be difficult to make stably the particle diameter distribution of the spinel based inclusion within the range defined in the invention unless the slag basicity after the addition of Si is optimized as described later.

As the unavoidable impurities, it is preferred that the P content is 0.040% or less, and the S content is 0.002% or less, and it is also preferred that the Mg content is from 0 to 0.002%.

For controlling the easiness of the formation of the deformation induced martensite phase in the cold rolling, the value Md$_{30}$ defined by the following expression (1) is preferably in a range of from -50 to 0.

$$Md_{30} = 551 - 462(C+N) - 9.2Si - 8.1Mn - 13.7Cr - 29(Ni+Cu) - 18.5Mo \quad (1)$$

Herein, the element symbols in the expression (1) each represent the content of the corresponding element in terms of percentage by mass.

Non-metallic Inclusion

The non-metallic inclusion present in the steel is roughly classified into a soft type having a low melting point and a hard type having a high melting point. In the steel targeted by the invention, the former soft type is mainly a CaO-$SiO_2$ based material. The soft type inclusion is extended in the rolling direction in the hot rolling since it is in a liquid state at the hot rolling temperature, and is then collapsed and finely dispersed in the subsequent cold rolling. The soft inclusion of this type exerts substantially no adverse effect on the fatigue resistance characteristics of the thin sheet material.

What becomes a problem is the latter hard inclusion. The inclusion of this type remains as a granular material after the hot rolling, and after the cold rolling, hard particles having been crushed to a certain extent remain in the form of lining up in the rolling direction. The proportion of the length in the sheet thickness direction of the inclusion occupied in the sheet thickness is increased with the smaller sheet thickness, and the inclusion particles tend to function as a starting point and a propagation path of cracks due to the stress concentration around the inclusion particles. It has been found that the hard type inclusion that becomes a problem in the steel targeted by the invention is a TiN based inclusion and a spinel based inclusion containing one or more of Al and Mg. In particular, the TiN based inclusion has a tendency of growing associated with the decrease of the solubility of Ti in the process where the temperature of the molten steel is decreased in casting, and thus tends to become a problem.

According to the investigations by the inventors, when the number ratio of the TiN based inclusion and the spinel based inclusion described above that have a circle equivalent diameter of 6.0 $\mu$m or more is decreased in the stage of the hot rolled steel sheet, the inclusion distribution mode that is advantageous for improving the fatigue resistance characteristics on repeatedly receiving elastic deformation can be obtained in the form of a thin sheet material having a sheet thickness, for example, of from 20 to 500 $\mu$m. Specifically, it is extremely advantageous to provide a structure state in the stage of the hot rolled steel sheet, in which the total number density of the TiN based inclusion and the spinel based inclusion containing one or more of Al and Mg each having a circle equivalent diameter of 6.0 $\mu$m or more on the cross section in parallel to the rolling direction and the sheet thickness direction (L cross section) is 0.05 or less per square millimeter.

Examples of the more preferred structure state of the hot rolled steel sheet include a metal structure, in which in addition to the aforementioned provision of the number density, the maximum particle diameter of the circle equivalent diameter of the TiN based inclusion and the spinel based inclusion containing one or more of Al and Mg on the L cross section is 10.0 $\mu$m or less. In this case, the measurement area of the L cross section for determining the maximum particle diameter suffices to be 200 mm$^2$ or more.

It has been found that in a thin sheet material having a sheet thickness of from 20 to 500 $\mu$m, the number density of the non-metallic inclusion having a length in the rolling direction of 40 $\mu$m or more is particularly effectively 3.0 or less per square millimeter on the L cross section for improving the fatigue resistance characteristics on repeatedly receiving elastic deformation. Herein, a group of the non-metallic inclusion particles that line up with an interparticle distance in the rolling direction of 20 $\mu$m or less and an interparticle distance in the sheet thickness direction of 10 $\mu$m or less is assumed to be one non-metallic inclusion, as described in the foregoing.

As for the fatigue resistance characteristics, adjacent inclusion particles that line up closely to each other to a certain extent function as a starting point of occurrence of cracks, as similar to the case where the particles are present as a continuous one group of particles. As a result of the various investigations, a group of particles formed of plural non-metallic inclusion particles that line up while maintaining an interparticle distance in the rolling direction of 20 $\mu$m or less and an interparticle distance in the sheet thickness direction of 10 $\mu$m or less (which is assumed to be one non-metallic inclusion), particularly having a length in the rolling direction of 40 $\mu$m or more tends to be a starting point of cracks on repeated application of elastic deformation in the high strength steel as the target of the invention. However, even with the non-metallic inclusion of this type, the fatigue resistance characteristics can be improved by decreasing the number density thereof to 3.0 or less per square millimeter on the L cross section. It is estimated that the mechanism therefor is that in the case where the density of the non-metallic inclusion having a length in the rolling direction of 40 $\mu$m or more is sufficiently decreased, the non-metallic inclusion is prevented from exerting a function as a propagation path of cracks.

The number density of the non-metallic inclusion having a length in the rolling direction of 40 $\mu$m or more on the L cross section that is as low as possible is advantageous for the enhancement of the fatigue resistance characteristics of the thin sheet material. In the case where a steel is manufactured by using raw materials having high purities without the use of scraps, for example, with an experimental melting furnace, it is considered that a thin sheet material containing an extremely small amount of a non-metallic inclusion can be produced. However, in the case where a steel sheet having a thickness of from 20 to 500 $\mu$m is manufactured in mass production sites, the complete prevention of the formation of the non-metallic inclusion having a length in the rolling direction of 40 $\mu$m or more increases the load in the steel manufacturing, which leads to increase of the cost. Therefore, it is rational that in the thin sheet material having a sheet thickness of from 20 to 500 $\mu$m, the number density of the non-metallic inclusion having a length in the rolling direction of 40 $\mu$m or more is in a range of from 0.1 to 3.0 per square millimeter on the L cross section.

Production Method

The stainless steel sheet having the optimized particle size distribution of the hard non-metallic inclusion described above can be produced by utilizing an ordinary manufacturing equipment for a stainless steel. Representative examples thereof include a VOD process and an AOD process. In any process, a molten steel having a C content of 0.20% or less having a Cr oxide-containing slag on a molten steel surface after subjecting to a decarburization process by blowing oxygen into a Cr-containing molten iron is produced firstly. The steel making process up to this stage may be performed according to the ordinary method except that such a container is selected as the container housing the molten steel that Ti and Al are substantially or completely not incorporated from an attachment and the like of the container.

The molten steel in this stage is the molten steel having been subjected to decarburization by blowing oxygen, and therefore easily oxidizable elements, Ti, Al, Mg, and Si, are substantially oxidized and removed. That is, Ti, Al, Mg, Si are substantially not present in the molten steel. Furthermore, a part of Cr, which is contained in a large amount in the molten steel, is oxidized to form a slag as a Cr oxide on the molten steel surface. The slag formed mainly of a Cr oxide contains oxides of Ti, Al, Mg, and Si having been removed from the molten steel. The molten steel also contains a large amount of oxygen dissolved therein having been blown for the decarburization. Accordingly, deoxidation is necessarily performed before casting. In the invention, Si is necessarily contained in the steel for producing a large Si content steel having a Si content exceeding 2.00%. Furthermore, it is desirable to perform a process of returning Cr escaping from the molten steel in the decarburization from the slag to the steel (reduction and recovery of Cr). In the invention, accordingly, the "deoxidation", the "control of the Si content", and the "reduction and recovery of Cr" are performed at one time by adding an Fe-Si alloy to the molten steel. Furthermore, the component control is performed by adding other auxiliary raw materials depending on necessity.

By controlling the Si content to more than 2.00% by adding the Fe-Si alloy to the molten steel, the deoxidation in the steel proceeds with the Si source added in a large amount. The oxygen concentration in the steel by the deoxidation is determined through the chemical equilibrium of the chemical reaction of the expression (2) below.

$$\text{Si(in metal) + 2O(in metal) = SiO}_2\text{(in slag)} \qquad (2)$$

The equilibrium constant K is shown by the expression (3) below.

$$K = A(SiO_2)/A(Si)/A(O)^2 \qquad (3)$$

In the expression, A(X) represents the activity of the component X. As understood from the expression (3), when the Si activity (i.e., the Si concentration) in the molten steel is larger, the oxygen activity (i.e., the oxygen concentration) in the molten steel shows an equilibrium at a lower level. Therefore, in the molten steel having a large amount of the Si source added targeted by the invention, the oxygen concentration in the molten steel becomes smaller than a small Si content steel (for example, an ordinary steel, such as SUS 304).

The chemical equilibrium based on the following expression (4) is established between the Al oxide in the slag and oxygen in the molten steel.

$$\text{2Al(in metal) + 3O(in metal) = Al}_2\text{O}_3\text{(in slag)} \qquad (4)$$

According to the chemical equilibrium, the equilibrium is retained by increasing the Al concentration in the molten steel when the oxygen concentration in the molten steel is small. The relationship is also applied to Ti and Mg. Consequently, when the oxygen concentration in the molten steel is small, the Al concentration, the Ti concentration, and the Mg concentration in the molten steel are increased.

When the Al concentration and the Mg concentration in the molten steel are larger, the spinel based inclusion tends to be formed and grown. When the Ti concentration in the molten steel is larger, the TiN based inclusion tends to be formed and grown. Therefore, for suppressing the formation and growth of the inclusions, the decrease of the oxygen concentration in the molten steel associated with the increase of the Si concentration in the molten steel is necessarily suppressed as much as possible. For suppressing the decrease of the oxygen concentration in the molten steel, it is advantageous that the $SiO_2$ concentration in the slag is larger. Accordingly, the invention uses a measure for controlling the slag basicity (i.e., the mass ratio of $CaO/SiO_2$) to a low level. Specifically, the amount of the Ca-containing substance added as a slag forming flux is controlled. The slag forming flux added may be quick lime CaO. Ca is also supplied to the slag from $CaF_2$, which is added as a flux component depending on necessity. Ca that is supplied from $CaF_2$ is

converted to the CaO amount and added to the CaO value used for calculating the basicity. As a result of the various investigations, it has been found that it is effective to make the slag basicity in a range of 1.3 or more and 1.5 or less in the slag present on the molten steel surface after completing the addition of the Fe-Si alloy. The slag basicity is more preferably 1.3 or more and 1.45 or less, and further preferably 1.3 or more and 1.4 or less. With a smaller slag basicity, the decrease of the oxygen concentration in the molten steel is suppressed, and Ti, Al, and Mg are prevented from being incorporated into the molten steel from the slag. However, with a too small slag basicity, other inclusions, such as $Cr_2O_3$, are formed in a large amount. The desulfurization capability is also lowered. Therefore, it is extremely effective to control the final slag basicity to a range that is not lower than 1.3.

As described above, the molten steel having been subjected to the decarburization by blowing oxygen contains substantially no Ti, Al, and Mg, and these elements are present as oxides in the slag formed mainly of Cr oxide. Ti, Al, and Mg in the slag include those incorporated from the raw materials and the refractory and those incorporated from a slag, a metal, and the like of the previous batch attached to the facilities, such as an electric furnace and a converter furnace. For optimizing the particle diameter distribution of the hard inclusion in the steel sheet by controlling the slag basicity as described above, it is necessary that Ti, Al, and Mg are prevented from being newly incorporated after the time when the decarburization by blowing oxygen is completed, i.e., after the time when the Fe-Si alloy is added. In particular, it has been confirmed that when a slag attached in the previous charge remains in the container housing the molten steel, a coarse hard inclusion tends to be formed due to small amounts of Ti and Al incorporated from the attachment. For preventing the incorporation thereof from the container housing the molten steel, it is most preferred to use a container having a refractory constituting the inner surface of the container that is not used for housing a molten steel (i.e., a new ladle). It has also been confirmed that an Fe-Si alloy that is generally used in the production site of stainless steels contains impurities, such as Al and Ti, and Al and Ti incorporated therefrom become a factor forming a coarse hard inclusion. Therefore, in the invention, it is necessary to use an Fe-Si alloy having a high purity. Specifically, it is preferred to use an Fe-Si alloy having an Al content of 0.05% by mass or less and a Ti content of 0.05% by mass or less. It is also desirable that Ti and Al are prevented as much as possible from being incorporated from the other auxiliary raw materials and slag forming flux.

It is important that the container housing the molten steel, the auxiliary raw material, and the slag forming flux used are selected to make a Ti content in the molten steel of 0.008% by mass or less and an Al content therein of 0.008% by mass or less finally. In the case where the final Ti content and the final Al content in the steel exceed the aforementioned values, it is difficult to achieve stably the aforementioned intended particle diameter distribution of the hard inclusion even though the slag basicity is controlled in the aforementioned manner. While the content of Mg is desirably controlled to 0.002% by mass or less in the molten steel finally, it has been confirmed that when the container housing the molten steel, the auxiliary raw material, and the slag forming flux used are selected to make the Ti and Al contents within the aforementioned range, the particle diameter distribution of the spinel based inclusion is in the aforementioned intended state even though the Mg content in the steel is not particularly restricted, and no problem occurs.

It is more preferred that the Ti content in the molten steel is 0.006% by mass or less, and the Al content therein is 0.006% by mass or less.

The casting may be performed according to an ordinary method. In general, a cast piece is obtained by a continuous casting method. In the description herein, a steel material obtained by casting (i.e., a material having a solidification structure) is referred to as a cast piece. Accordingly, a steel ingot obtained by an ingot making method is encompassed in the cast piece referred herein for the sake of convenience.

The resulting cast piece is subjected to hot working including at least hot rolling, so as to provide a hot rolled steel sheet. In the case where the ingot making method is employed, after performing blooming and hot forging, hot rolling is performed. The heating temperature in the hot rolling may be from 1,100 to 1,250°C, and the sheet thickness of the hot rolled steel sheet may be, for example, from 2.5 to 6.0 mm. According to the manners, the stainless steel hot rolled sheet, in which the total number density of the TiN based inclusion and the spinel based inclusion containing one or more of Al and Mg each having a circle equivalent diameter of 6.0 μm or more on the cross section in parallel to the rolling direction and the sheet thickness direction (L cross section) is 0.05 or less per square millimeter, can be obtained.

Subsequently, the hot rolled steel sheet is subjected to annealing, cold rolling, and an aging treatment, and thereby a thin sheet material of the high strength stainless steel sheet can be obtained. The step of cold rolling may be performed plural times including an intermediate annealing step. After each of the heat treatments, acid pickling may be performed depending on necessity. The condition for the annealing applied to the hot rolled steel sheet (i.e., the hot rolled sheet annealing) may be, for example, from 1,000 to 1,100°C for from 40 to 120 seconds, the final cold rolling reduction ratio (which is the cold rolling reduction ratio after the final intermediate annealing in the case where the intermediate annealing is performed) may be, for example, from 40 to 70%, and the condition for the aging treatment may be, for example, from 400 to 600°C for from 10 to 60 minutes. For the purpose of a thin sheet spring material, the final sheet thickness is, for example, preferably 150 μm or less, and more preferably less than 100 μm. For example, a thin sheet material having a thickness of from 20 to 70 μm may be provided. According to the manners, the thin sheet material of the high strength stainless steel having a mixed structure of a deformation induced martensite phase and an austenite phase as the matrix (metal basis material) can be obtained. The ratio of an area ratio M of the deformation induced martensite phase and an area ratio A of the austenite phase in terms of M/A is generally in a range of from 30/70 to 50/50. In the material containing Mo in an amount, for example, of 2.00% or more, a high strength with a tensile strength in the rolling direction of 2,000 N/mm$^2$ can be obtained. In the thin sheet material, assuming that a group of the non-metallic inclusion particles that line up with an interparticle distance in the rolling direction of 20 $\mu$m or less and an interparticle distance in the sheet thickness direction of 10 $\mu$m or less is one non-metallic inclusion, a structure state, in which the number density of the non-metallic inclusion having a length in the rolling direction of 40 $\mu$m or more is 3.0 or less per square millimeter on the L cross section can be obtained, and the thin sheet material exhibits good fatigue resistance characteristics in the purpose of a spring material, which repeatedly receives elastic stress.

Examples

The steels shown in Table 1 were manufactured by a VOD process. In each of the steels, the final decarburization process by blowing oxygen into the Cr-containing molten iron was completed in the VOD equipment, and a molten steel having a C content of 0.10% or less having a Cr oxide-containing slag on the molten steel surface was obtained. In this stage, the C content is substantially equal to the final C content shown in Table 1.

Table 1

| Class | No. | Chemical composition (% by mass) | | | | | | | | | | | | $Md_{30}$ |
|---|---|---|---|---|---|---|---|---|---|---|---|---|---|---|
| | | C | Si | Mn | P | S | Ni | Cr | Mo | Cu | N | Ti | Al | |
| Conventional Example | 1 | 0.080 | 2.64 | 0.25 | 0.020 | 0.001 | 8.32 | 13.42 | 2.22 | 0.10 | 0.068 | 0.023 | 0.010 | -12.8 |
| | 2 | 0.086 | 2.74 | 0.23 | 0.020 | 0.001 | 8.25 | 13.43 | 2.22 | 0.10 | 0.066 | 0.018 | 0.010 | -13.5 |
| | 3 | 0.086 | 2.65 | 0.42 | 0.029 | 0.001 | 8.34 | 13.57 | 2.23 | 0.18 | 0.066 | 0.010 | 0.009 | -21.3 |
| | 4 | 0.072 | 2.60 | 0.28 | 0.030 | 0.001 | 8.28 | 13.71 | 2.14 | 0.07 | 0.073 | 0.010 | 0.006 | -11.7 |
| Invention Example | 5 | 0.086 | 2.73 | 0.22 | 0.028 | 0.001 | 8.32 | 13.73 | 2.23 | 0.28 | 0.069 | 0.004 | 0.004 | -26.3 |

In the final decarburization in the VOD equipment, the container housing the molten steel used was a ladle, and the same ladle was used in the process up to casting. As the ladle, a ladle that had been used for manufacturing a Ti-containing stainless steel as the previous charge was used for Conventional Examples Nos. 1 and 2, a ladle that had been used for manufacturing a Ti-free stainless steel as the previous charge was used for Conventional Examples Nos. 3 and 4, and a ladle having a refractory constituting the inner surface of the ladle that was not used for housing a molten steel (i.e., a new ladle) was used for Invention Example No. 5.

An Fe-Si alloy was added to the molten steel having been completed for the final decarburization, so as to control the Si content in the molten steel to the target value, and to perform deoxidation, and reduction and recovery of Cr in the slag. In this stage, the Si content in the molten steel is substantially equal to the final Si content shown in Table 1. As the Fe-Si alloy, a material corresponding to the ferrosilicon No. 2 defined in JIS G2302:1998 was used for Conventional Examples Nos. 1 to 4. As a result of the analysis, the material corresponding to the ferrosilicon No. 2 contained approximately 1.0% by mass of Al, approximately 0.07% by mass of Mg, and approximately 0.08% by mass of Ti, while there was a certain fluctuation depending on the product lot. On the other hand, a high quality Fe-Si alloy having an Al content having been extremely decreased was used for Invention Example No. 5. As a result of the analysis, the Al, Mg, and Ti contents of the high quality Fe-Si alloy were 0.009% by mass for Al, less than 0.001% by mass for Mg, and 0.012% by mass for Ti.

Subsequent to the addition of the Fe-Si alloy, industrial quick lime (CaO) was added as a slag forming flux to the slag. Thereafter, the slag was collected and subjected to compositional analysis. As a result, the slag basicity was from 1.60 to 1.65 for Conventional Examples Nos. 1 to 4, and 1.33 for Invention Example No. 5.

In each of the examples, the molten steel thus obtained above was continuously cast and subjected to hot rolling, so as to provide a hot rolled steel sheet having a sheet thickness of 3.8 mm. The heating temperature in the hot rolling was 1,230°C. For the resulting hot rolled steel sheet, the L cross section was observed with an SEM, and according to the aforementioned section "Measurement Method for Number Density of Inclusion in Hot Rolled Steel Sheet", the total number density of the TiN based inclusion and the spinel based inclusion containing one or more of Al and Mg each having a circle equivalent diameter of 6.0 $\mu$m or more was measured. As a result, the total number density was from 0.20 to 0.45 per square millimeter for Conventional Examples Nos. 1 to 4, and 0.02 per square millimeter for Invention Example No. 5. It was understood that the formation of a coarse hard inclusion was significantly suppressed by the manufacturing method according to the invention.

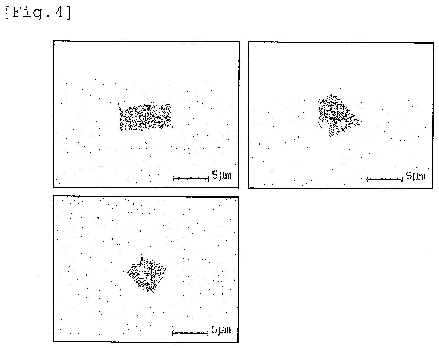

Fig. 3 exemplifies the SEM micrograph of the typical TiN based inclusion observed on the L cross section of the hot rolled steel sheet of Conventional Example No. 4, and Fig. 4 exemplifies the SEM micrograph of the typical TiN based inclusion observed on the L cross section of the hot rolled steel sheet of Invention Example No. 5. In all the micrographs, the horizontal direction agrees with the rolling direction. The cross-hair cursor appearing in the micrographs shows the beam irradiation position in the EDX analysis.

Subsequently, a specimen collected from the hot rolled steel sheet was subjected to hot rolled sheet annealing at 1,050°C for 60 seconds, cold rolling, intermediate annealing at 1,050°C for 60 seconds, cold rolling, and an aging treatment at 500°C for 30 minutes, so as to produce a thin sheet material having a sheet thickness of 120 $\mu$m having a mixed structure of a deformation induced martensite phase and an austenite phase as the matrix (metal basis material). In all the resulting thin sheet materials, the tensile strength in the rolling direction exceeded 2,000 N/mm$^2$.

The L cross section of the thin sheet material was measured for the number density of the non-metallic inclusion having a length in the rolling direction of 40 $\mu$m or more according to the aforementioned section "Measurement Method for Number Density of Non-metallic Inclusion having Length in Rolling Direction of 40 $\mu$m or more". As described above, a group of the non-metallic inclusion particles that lined up with an interparticle distance in the rolling direction of 20 $\mu$m or less and an interparticle distance in the sheet thickness direction of 10 $\mu$m was assumed to be one non-metallic inclusion. As a result of the measurement, the number density of the non-metallic inclusion having a length in the rolling direction of 40 $\mu$m or more on the L cross section was from 8.2 to 33.2 per square millimeter for Conventional Examples Nos. 1 to 4, and 2.4 per square millimeter for Invention Example No. 5. As a result of the EDX analysis, all the non-metallic inclusions counted were constituted by TiN based inclusion particles or spinel based inclusion particles containing one or more of Al and Mg.

In Invention Example, the number of the hard non-metallic inclusion having a length in the rolling direction of 40 $\mu$m or more, which was a factor deteriorating the fatigue resistance characteristics, was largely decreased as compared to Conventional Examples.

For reference, a production example for the case where SUS 304 (having a Si content of 0.55%) is subjected to deoxidation with an Fe-Si alloy is shown. A ladle that had been used for manufacturing a Ti-containing stainless steel as the previous batch was used as the container housing the molten steel, and the final decarburization process by blowing oxygen into the Cr-containing molten iron was completed in the VOD equipment, thereby providing a molten steel having a C content of approximately 0.05% having a Cr oxide-containing slag on the molten steel surface. The Fe-Si alloy corresponding to the ferrosilicon No. 2 was added to the molten steel, so as to control the Si content. Industrial quick lime (CaO) was added as a slag forming flux. Thereafter, chromium nitride was added to complete the component control. As a result of the analysis of the final slag collected, the slag basicity was 1.65. The molten steel was continuously cast and subjected to hot rolling in the ordinary method, so as to provide a hot rolled steel sheet having a sheet thickness of 3.5 mm. The hot rolled steel sheet was investigated for the state of the presence of the non-metallic inclusion in the same manner as in Nos. 1 to 5. As a result, a TiN based inclusion and a spinel based inclusion containing one or more of Al and Mg each having a circle equivalent diameter of 6.0 μm or more were not found. It is understood from the comparison between the example of SUS 304 and Conventional Examples Nos. 1 to 4 that it is considerably difficult to suppress the formation of a hard inclusion in a stainless steel species having a large Si content.

**Claims**

1. A stainless steel sheet: having a sheet thickness of from 20 to 500 μm; having a chemical composition containing, in terms of percentage by mass, from 0.010 to 0.200% of C, more than 2.00% and 4.00% or less of Si, from 0.01 to 3.00% of Mn, 3.00% or more and less than 10.00% of Ni, from 11.00 to 20.00% of Cr, from 0.010 to 0.200% of N, from 0 to 3.00% of Mo, from 0 to 1.00% of Cu, from 0.001 to 0.008% of Ti, from 0.001 to 0.008% of Al, 0.040% or less of P, 0.002% or less of S, 0 to 0.002% of Mg, and the balance of Fe, with unavoidable impurities; and having, with an assumption that in a cross section, L cross section, in parallel to a rolling direction and a sheet thickness direction, a group of non-metallic inclusion particles that line up with an interparticle distance in the rolling direction of 20 μm or less and an interparticle distance in the sheet thickness direction of 10 μm or less is one non-metallic inclusion, a number density of the non-metallic inclusion having a length in the rolling direction of 40 μm or more of 3.0 or less per square millimeter on the L cross section.

2. The stainless steel sheet according to claim 1, wherein the non-metallic inclusion having a length in the rolling direction of 40 μm or more contains one or two of (i) and (ii): (i) a TiN based inclusion particle and (ii) a spinel based inclusion particle containing one or more of Al and Mg.

3. The stainless steel sheet according to claim 1 or 2, wherein the stainless steel sheet has a tensile strength in the rolling direction of 2,000 N/mm$^2$ or more.

4. The stainless steel sheet according to claim 1 or 2, wherein the stainless steel sheet has a mixed structure of a deformation induced martensite phase and an austenite phase as a matrix.

5. A production method of a stainless steel sheet comprising:

   a step of providing a molten steel having a chemical composition (A) below, in such a manner that in component control by adding an auxiliary raw material and a slag forming flux to a molten steel having a C content of 0.20% or less having a Cr oxide-containing slag on a molten steel surface after subjecting to a decarburization process by blowing oxygen into a Cr-containing molten iron, a container housing the molten steel, the auxiliary raw material, and the slag forming flux used are selected to make a Ti content in the molten steel of 0.008% by mass or less and an Al content therein of 0.008% by mass or less, at least an Fe-Si alloy as the auxiliary raw material is dissolved in the molten steel to perform deoxidation, reduction and recovery of Cr in the slag into the molten steel, and control of a Si content in the steel, and a Ca-containing slag forming flux is added to control a slag basicity, which is a mass ratio of CaO/SiO$_2$, to from 1.3 to 1.5;
   a step of providing a cast piece by casting the molten steel obtained in the preceding step;
   a step of providing a hot rolled steel sheet by subjecting the cast piece to hot working including at least hot rolling; and
   a step of providing a cold rolled steel sheet having a sheet thickness of from 20 to 500 μm by subjecting the hot rolled steel sheet to annealing and cold rolling one or more times:

      (A) in terms of percentage by mass, from 0.010 to 0.200% of C, more than 2.00% and 4.00% or less of Si, from 0.01 to 3.00% of Mn, 3.00% or more and less than 10.00% of Ni, from 11.00 to 20.00% of Cr, from 0.010 to 0.200% of N, from 0 to 3.00% of Mo, from 0 to 1.00% of Cu, from 0.001 to 0.008% of Ti, from 0.001 to 0.008% of Al, 0.040% or less of P, 0.002% or less of S, 0 to 0.002% of Mg, and the balance of Fe, with unavoidable impurities.

6. The production method of a stainless steel sheet according to claim 5, wherein the container housing the molten steel used is a container having a refractory constituting the inner surface of the container that is not used for housing a molten steel, i.e. a new ladle.

7. The production method of a stainless steel sheet according to claim 5, wherein the Fe-Si alloy used has an Al content of 0.05% by mass or less, and a Ti content of 0.05% by mass or less.

8. The production method of a stainless steel sheet according to claim 5, wherein the production method further comprises:
a step of subjecting the cold rolled steel sheet to an aging treatment.

**Patentansprüche**

1. Rostfreies Stahlblech mit einer Blechdicke von 20 bis 500 $\mu$m; mit einer chemischen Zusammensetzung, die in Massenprozent Folgendes aufweist: von 0,010 bis 0,200% C, mehr als 2,00% und 4,00% oder weniger Si, von 0,01 bis 3,00% Mn, 3,00% oder mehr und weniger als 10,00% Ni, von 11,00 bis 20,00% Cr, von 0,010 bis 0,200% N, von 0 bis 3,00% Mo, von 0 bis 1,00% Cu, von 0,001 bis 0,008% Ti, von 0,001 bis 0,008% Al, 0,040 % oder weniger P, 0,002 % oder weniger S, 0 bis 0,002 % Mg, und wobei der Rest Fe mit unvermeidbaren Verunreinigungen ist; und welches, mit einer Annahme, dass in einem Querschnitt, ein L-Querschnitt, parallel zu einer Walzrichtung und einer Blechdickenrichtung eine Gruppe von nicht-metallischen eingeschlossenen Partikeln, die sich mit einer Distanz zwischen den Partikeln in einer Walzrichtung von 20 $\mu$m oder weniger und mit einer Distanz zwischen den Partikeln in der Blechdickenrichtung von 10 $\mu$m oder weniger aneinander reihen, ein nicht-metallischer Einschluss ist, eine Anzahldichte bzw. Dichtenzahl des nicht-metallischen Einschlusses mit einer Länge in der Walzrichtung von 40 $\mu$m oder mehr von 3,0 oder weniger pro Quadratmillimeter auf dem L-Querschnitt hat.

2. Rostfreies Stahlblech nach Anspruch 1, wobei der nicht-metallische Einschluss mit einer Länge in der Walzrichtung von 40 $\mu$m oder mehr eines oder beides von (i) und (ii) enthält: (i) einen TiN-basierten Einschlusspartikel und (ii) einen spinel-basierten Einschlusspartikel. der Al und/oder Mg enthält.

3. Rostfreies Stahlblech nach Anspruch 1 oder 2, wobei das rostfreie Stahlblech eine Zugfestigkeit in Walzrichtung von 2000 N/mm$^2$ oder mehr hat.

4. Rostfreies Stahlblech nach Anspruch 1 oder 2 wobei das rostfreie Stahlblech eine gemischte Struktur einer durch Verformung hervorgerufenen Martensidphase und einer Austenitphase als Matrix hat.

5. Herstellungsverfahren für ein rostfreies Stahlblech, welches Folgendes aufweist:

einen Schritt des Vorsehens eines geschmolzenen Stahls mit einer chemischen Zusammensetzung (A) unten, derart, dass bei einer Steuerung der Komponenten durch Hinzugeben von zusätzlichem Rohmaterial und einem Schlacke bildenden Fließmittel zu einem geschmolzenen Stahl mit einem C-Gehalt von 0,20 % oder weniger mit einer Chromoxid enthaltenden Schlacke auf der Oberfläche des geschmolzenen Stahls, nachdem dieser einem Entkohlungsprozess durch Blasen von Sauerstoff in ein Cr enthaltendes geschmolzenes Eisen unterworfen wurde, wobei ein Behälter den geschmolzenen Stahl aufnimmt, das zusätzliche Rohmaterial und das Schlacke bildende Fließmittel so verwendet werden, dass ausgewählt wird, dass ein Ti-Gehalt in dem geschmolzenen Stahl zu 0,008 Massen-% oder weniger gemacht wird, und ein Al-Gehalt darin zu 0,008 Massen-% oder weniger gemacht wird, wobei zumindest eine Fe-Si-Legierung als das zusätzliche Rohmaterial in dem geschmolzenen Stahl gelöst wird, um eine Deoxidierung, Reduktion und Wiedergewinnung von Cr in der Schlacke in den geschmolzenen Stahl auszuführen, und wobei ein Si-Gehalt in dem Stahl gesteuert wird, und wobei ein Ca enthaltendes Schlacke bildendes Fließmittel hinzugefügt wird, um einen Basegehalt bzw. die Basizität der Schlacke, was ein Massenverhältnis von CaO/SiO$_2$ ist, auf 1,3 bis 1,5 zu steuern;
einen Schritt des Vorsehens eines Gussteils durch Gießen des geschmolzenen Stahls, der in dem vorhergehenden Schritt erhalten wurde;
einen Schritt des Vorsehens eines warmgewalzten Stahlbleches durch Unterwerfen des Gussteils einem Warmbearbeitungsvorgang, der zumindest einen Warmwalzvorgang einschließt; und
einen Schritt des Vorsehens eines kaltgewalzten Stahlbleches mit einer Blechdicke von 20 bis 500 $\mu$m durch Unterwerfen des warmgewalzten Stahlbleches einer Wärmebehandlung und einem Kaltwalzvorgang für ein oder mehrere Male:

(A) In Massenprozent von 0,010 bis 0,200% C, mehr als 2,00% und 4,00% oder weniger Si, von 0,01 bis 3,00% Mn, 3,00% oder mehr und weniger als 10,00% Ni, von 11,00 bis 20,00% Cr, von 0,010 bis 0,200% N, von 0 bis 3,00% Mo, von 0 bis 1,00% Cu, von 0,001 bis 0,008% Ti, von 0,001 bis 0,008% Al, 0,040 % oder weniger P, 0,002 % oder weniger S, 0 bis 0,002 % Mg, und wobei der Rest Fe mit unvermeidbaren Verunreinigungen ist.

6. Herstellungsverfahren für ein rostfreies Stahlblech nach Anspruch 5, wobei der Behälter, der zur Aufnahme des geschmolzenen Stahlbleches verwendet wird, ein Behälter mit einem feuerfesten Material ist, welches die Innenfläche des Behälters bildet, der nicht zur Aufnahme eines geschmolzenen Stahls verwendet wird, d.h. eine neue Pfanne.

7. Herstellungsverfahren für ein rostfreies Stahlblech nach Anspruch 5, wobei die verwendete Fe-Si-Legierung einen Al-Gehalt von 0,05 Massen-% oder weniger und einen Ti-Gehalt von 0,05 Massen-% oder weniger hat.

8. Herstellungsverfahren für ein rostfreies Stahlblech nach Anspruch 5, wobei das Herstellungsverfahren weiter Folgendes aufweist:
einen Schritt des Unterwerfens des kaltgewalzten Stahlbleches einer Alterungsbehandlung.

**Revendications**

1. Tôle d'acier inoxydable : ayant une épaisseur de feuille comprise entre 20 et 500 $\mu$m ; ayant une composition chimique contenant, en pourcentage en masse, de 0,010 à 0,200 % de C, plus de 2,00 % et 4,00 % ou moins de Si, de 0,01 à 3,00 % de Mn, 3,00 % ou plus et moins de 10,00 % de Ni, de 11,00 à 20,00 % de Cr, de 0,010 à 0,200 % de N, de 0 à 3,00 % de Mo, de 0 à 1,00 % de Cu, de 0,001 à 0,008 % de Ti, de 0,001 à 0,008 % de Al, 0,040 % ou moins de P, 0,002 % ou moins de S, 0 à 0,002 % de Mg et le reste composé de Fe avec d'inévitables impuretés ; et ayant, en supposant que dans une coupe, une section transversale en L, parallèlement à une direction de laminage et une direction d'épaisseur de feuille, un groupe de particules d'inclusion non métalliques qui sont alignées avec une distance inter-particules dans la direction de laminage de 20 $\mu$m ou moins et une distance inter-particules dans la direction de l'épaisseur de feuille de 10 $\mu$m ou moins est une seule inclusion non métallique, une densité en nombre de l'inclusion non métallique ayant une longueur dans la direction de laminage de 40 $\mu$m ou plus, de 3,0 ou moins par millimètre carré sur la section transversale en L.

2. Tôle d'acier inoxydable selon la revendication 1, dans laquelle l'inclusion non métallique ayant une longueur dans la direction de laminage de 40 $\mu$m ou plus contient l'un ou les deux de (i) et (ii) : (i) une particule d'inclusion à base de TiN et (ii) une particule d'inclusion à base de spinelle contenant un ou plusieurs éléments parmi Al et Mg.

3. Tôle d'acier inoxydable selon la revendication 1 ou 2, dans laquelle la tôle d'acier inoxydable a une résistance à la traction dans la direction de laminage de 2000 N/mm$^2$ ou plus.

4. Tôle d'acier inoxydable selon la revendication 1 ou 2, dans laquelle la tôle d'acier inoxydable a une structure mixte constituée d'une phase martensite induite par déformation et d'une phase austénitique en tant que matrice.

5. Procédé de fabrication d'une tôle d'acier inoxydable comprenant :

une étape consistant à prévoir un acier en fusion ayant une composition (A) ci-après, de telle sorte que dans un contrôle de composants en ajoutant un matériau brut auxiliaire et un flux de formation de scorie à un acier en fusion ayant une teneur en C de 0,20 % ou moins ayant une scorie contenant de l'oxyde de Cr sur une surface de l'acier en fusion après soumission à un processus de décarburation en soufflant de l'oxygène dans un acier en fusion contenant du Cr, un container contenant l'acier en fusion, le matériau brut auxiliaire et le flux de formation de scorie utilisés sont sélectionnés pour donner une teneur en Ti dans l'acier en fusion de 0,008% en masse ou moins et une teneur en Al de 0,008% en masse ou moins, au moins un alliage Fe-Si en tant que le matériau brut auxiliaire est dissout dans l'acier en fusion pour réaliser une désoxydation, une réduction et une récupération de Cr dans la scorie dans l'acier en fusion, et en contrôlant une teneur en Si dans l'acier, et un flux de formation de scorie contenant Ca est ajouté pour contrôler la basicité de la scorie, qui est le rapport en masse de CaO/SiO$_2$, à une valeur comprise entre 1,3 et 1,5 ;
une étape consistant à obtenir une pièce moulée en moulant l'acier en fusion obtenu dans l'étape précédente ;
une étape consistant à obtenir une tôle d'acier laminé à chaud en soumettant la pièce moulée à un travail à chaud comprenant au moins un laminage à chaud ; et
une étape consistant à obtenir une tôle d'acier laminé à froid ayant une épaisseur de feuille comprise entre 20 et 500 $\mu$m en soumettant la tôle d'acier laminé à chaud à un recuit et à laminage à froid une ou plusieurs fois :

(A) en pourcentage en masse, de 0,010 à 0,200 % de C, plus de 2,00 % et 4,00 % ou moins de Si, de 0,01 à 3,00 % de Mn, 3,00 % ou plus et moins de 10,00 % de Ni, de 11,00 à 20,00 % de Cr, de 0,010 à 0,200 % de N, de 0 à 3,00 % de Mo, de 0 à 1,00 % de Cu, de 0,001 à 0,008 % de Ti, de 0,001 à 0,008 % de Al, 0,040 % ou moins de P, 0,002 % ou moins de S, 0 à 0,002 % de Mg et le reste composé de Fe avec d'inévitables impuretés.

6. Procédé de fabrication d'une tôle d'acier inoxydable selon la revendication 5, dans lequel le conteneur contenant l'acier en fusion utilisé est un conteneur comportant un élément réfractaire constituant la surface intérieure du conteneur qui n'est pas utilisé pour contenir de l'acier en fusion, c'est-à-dire une nouvelle poche de coulée.

7. Procédé de fabrication d'une tôle d'acier inoxydable selon la revendication 5, dans lequel l'alliage Fe-Si utilisé a une teneur en Al de 0,05 % en masse ou moins, et une teneur en Ti de 0,05 % en masse ou moins.

8. Procédé de fabrication d'une tôle d'acier inoxydable selon la revendication 5, dans lequel le procédé de fabrication comprend en outre :
une étape consistant à soumettre la tôle d'acier laminée à froid à un traitement de vieillissement.

[Fig.1]

50 μm

[Fig.2]

50 μm

[Fig.3]

[Fig.4]

**EP 3 358 029 B1**

**REFERENCES CITED IN THE DESCRIPTION**

**Patent documents cited in the description**

- JP 3219117 B
- JP 3865853 B
- JP 5212581 B
- JP 2005290449 A
- JP 2002167647 A